# FASCICULE DE BREVET EUROPEEN

(11) **EP 3 362 690 B1**
(45) Date de publication et mention de la délivrance du brevet: **19.08.2020**
(21) Numéro de dépôt: 16790671.8
(22) Date de dépôt: 07.10.2016
(51) Int. Cl.: G05B 9/03

(54) **SYSTEME DE COMMANDE DE CIRCULATION DE FLUIDE, INSTALLATION D'ALIMENTATION COMPRENANT UN TEL SYSTEME DE COMMANDE ET PROCEDE EMPLOYANT UNE TELLE INSTALLATION D'ALIMENTATION**
SYSTEM ZUR STEUERUNG EINES FLUIDSTROMS, ZUFUHRSYSTEM MIT SOLCH EINEM STEUERUNGSSYSTEM UND VERFAHREN MIT SOLCH EINEM ZUFUHRSYSTEM
SYSTEM FOR CONTROLLING A FLOW OF FLUID, FEEDING SYSTEM COMPRISING SUCH A CONTROL SYSTEM AND METHOD USING SUCH A FEEDING SYSTEM

(30) Priorité: 16.10.2015 FR 1559835
(43) Date de publication de la demande: 22.08.2018
(73) Titulaire: L'Air Liquide Société Anonyme pour l'Etude et l'Exploitation des Procédés Georges Claude, 75007 Paris (FR)
(72) Inventeur: COBBAUT, Jan, 1030 Bruxelles (BE); MAIRE, Claude, 25220 Chaleze (FR); RAUCH, Jean-François, 94100 Saint-Maur Des Fosses (FR)
(74) Mandataire: Mercey, Fiona Susan
(86) Numéro de dépôt international: PCT/FR2016/052586
(87) Numéro de publication internationale: WO 2017/064398

(56) Documents cités:
- EP-A1- 2 525 104
- EP-A2- 0 756 118
- EP-A2- 1 630 425

## Description

La présente invention concerne un système de commande pour commander la circulation d'un fluide réactionnel. De plus, la présente invention concerne une installation d'alimentation comprenant un tel système de commande. Par ailleurs, la présente invention concerne un procédé d'alimentation mettant en œuvre une telle installation d'alimentation. Elle concerne également un appareil de distillation cryogénique comprenant un système de commande pour commander la circulation d'au moins un fluide destiné à ou provenant de la distillation.

La présente invention peut s'appliquer à tout domaine nécessitant de commander la circulation d'un fluide réactionnel de manière fiable et sûre. En particulier, la présente invention peut s'appliquer à la circulation de fluides réactionnels dangereux, par exemple des liquides ou gaz toxiques et/ou inflammables et/ou explosibles. De tels liquides ou gaz incluent par exemple des hydrocarbures (CnHm), de l'oxygène, du dihydrogène, du monoxyde de carbone, du dioxyde de carbone, de l'air, de l'azote, de l'argon ou tout mélange composé au moins d'un ou plusieurs de ces composants.

Dans le domaine de la commande de la circulation d'un fluide réactionnel dangereux, on connaît des systèmes de commande comprenant i) des conduites primaires reliées à une source de fluide de commande, par exemple de l'air comprimé, et ii) des vannes de débit agencées sur des canalisations respectives dans lesquelles circule le fluide réactionnel. Chaque vanne de débit présente i) une position de fermeture et ii) une position d'ouverture. Chaque vanne de débit peut passer soit en position de fermeture (vanne fermée par manque de fluide de commande) soit en position d'ouverture (vanne ouverte par manque de fluide de commande) lorsque la pression de l'air comprimé dans la conduite primaire respective devient nulle.

Dans le domaine de la sécurité d'écoulement d'un fluide réactionnel, on connait des systèmes de commande en tout-ou-rien qui bloquent ou maximisent le débit de fluide réactionnel au moyen de vannes de commande qui sont soit totalement ouvertes, soit totalement fermées selon la pression du fluide de commande dans la conduite primaire. Pour combiner la fonction de commande et la fonction de sécurité, les systèmes de commande connus comprennent parfois une ou deux électrovannes de sécurité pour chaque vanne de débit. Chaque électrovanne de sécurité est agencée sur la conduite primaire de façon à commander, d'une part, le passage rapide du fluide de commande vers la vanne de débit, d'autre part, l'échappement rapide du fluide de commande hors de la conduite primaire. Ainsi, chaque électrovanne de sécurité permet de commander sélectivement l'ouverture et la fermeture de chaque vanne de débit, donc le passage ou le blocage du fluide réactionnel dans la canalisation.

Cependant, chaque électrovanne de sécurité présente des risques de panne ou de défaillance, car les électrovannes de sécurité peuvent subir des défauts d'alimentation électrique ou subir des perturbations électromagnétiques, ce qui les empêche de fonctionner correctement. Donc, pour assurer une redondance de la fonction de sécurité, un système de commande de l'état de la technique nécessite une deuxième électrovanne de sécurité, ainsi qu'un système pour détecter la défaillance de chaque électrovanne de sécurité.

En outre, de tels systèmes de commande sont coûteux, car ils nécessitent une voire deux électrovannes de sécurité pour chaque vanne de débit. Or chaque électrovanne de sécurité induit un coût, direct ou induit, d'environ 1000 €. Dans un système de commande complet, plusieurs dizaines d'électrovannes de sécurité induisent donc un coût de plusieurs dizaines de milliers d'euros.

EP2525104A1 décrit un système selon le préambule de la revendication 1.

La présente invention a notamment pour but de résoudre, en tout ou partie, les problèmes mentionnés ci-avant.

Dans ce but, la présente invention a notamment pour objet un système de commande selon la revendication 1.

Ainsi, un tel système de commande a un coût fortement réduit, tout en présentant une grande fiabilité. En effet, dans un tel système de commande, il n'est pas indispensable d'équiper chaque vanne de débit d'une ou plusieurs électrovanne(s) de sécurité, puisque le dispositif de sécurité garantit le passage de chaque vanne de débit en position de fermeture lorsque le système de commande fonctionne en mode normal ou lorsque le système de commande fonctionne en mode défaillant, c'est-à-dire avec une pression du fluide de commande faible ou nulle.

En effet, lorsque le dispositif de sécurité est en configuration de service, le fluide de commande circule depuis la source de fluide de commande jusqu'à chaque conduite de commande, ce qui permet de placer si besoin chaque conduite de commande en position d'ouverture, car la pression du fluide de commande dans chaque conduite de commande est supérieure au seuil prédéterminé. Lorsque le dispositif de sécurité est en configuration de service, le débit de fluide de commande à travers la conduite d'évacuation est nul ou insignifiant.

Lorsque le dispositif de sécurité est en configuration de sécurité, le fluide de commande circule depuis chaque conduite de commande vers la conduite d'évacuation, ce qui permet de placer chaque vanne de débit en position de fermeture, car la pression du fluide de commande dans chaque conduite de commande devient inférieure au seuil prédéterminé. Lorsque le dispositif de sécurité est en configuration de sécurité, le débit de fluide de commande à travers chaque conduite de commande est nul ou insignifiant, si bien que le fluide réactionnel s'arrête de circuler dans les canalisations.

Lorsque la vanne de commande et la vanne d'évacuation ne sont plus alimentées en fluide de commande, par exemple en raison d'une défaillance survenue sur l'alimentation en fluide de commande, alors le dispositif de sécurité passe en configuration de sécurité, ce qui amène des vannes de débit en position de fermeture. Dans la présente demande, le terme « fluide » désigne notamment des fluides monophasiques (gaz ou liquide) ou des fluides multiphasiques, par exemple contenant des particules solides. Dans la présente demande, le terme « fluide réactionnel » désigne un fluide destiné à subir un traitement quelconque, par exemple une réaction chimique ou électrochimique, un traitement physique ou autre. Le traitement subi peut ou non modifier l'état et/ou la composition du fluide réactionnel.

Ainsi, des telles vannes de commande et d'évacuation permettent de former un dispositif de sécurité fiable, car la vanne de commande et la vanne d'évacuation peuvent être indépendantes l'une de l'autre, ce qui permet d'en actionner une même si l'autre est défaillante.

Ainsi, une telle électrovanne auxiliaire d'évacuation permet d'assurer une évacuation rapide du fluide de commande hors du conduit auxiliaire d'évacuation, ce qui permet de vite évacuer le fluide de commande hors du conduit, donc de vite fermer chaque vanne de débit, et ainsi de vite interrompre les débits de fluide(s) réactionnel(s).

Dans la présente demande, le terme « position de fermeture » désigne une position dans laquelle la vanne normalement fermée empêche la circulation du fluide réactionnel dans la canalisation. Dans la présente demande, le terme « position d'ouverture » désigne une position dans laquelle la vanne autorise la circulation du fluide réactionnel dans la canalisation.

Dans la présente demande, le terme « relier » ou un de ses dérivés concerne une mise en communication de fluide, liquide ou gaz, entre au moins deux composants, c'est-à-dire une mise en communication permettant une circulation de fluide entre ces deux composants, dans un sens et/ou dans le sens inverse. Une mise en communication de fluide peut être réalisée par l'intermédiaire d'aucun, d'un ou de plusieurs élément(s) intermédiaire(s).

Dans la présente demande, le terme « connecter » désigne toute connexion permettant un échange de signaux. Une connexion peut être réalisée avec ou sans fil électrique. Une connexion peut être réalisée avec aucun, un ou plusieurs élément(s) électrique(s) intermédiaire(s).

Selon une variante, la vanne de débit est une vanne normalement fermée. Alternativement, la vanne de débit est une vanne normalement ouverte. Dans la présente demande, le terme « vanne normalement fermée » désigne une vanne fermée par manque de fluide de commande, donc une vanne de coupure de circuit. Dans la présente demande, le terme « vanne normalement ouverte » désigne une vanne ouverte par manque de fluide de commande, donc une vanne d'établissement de circuit.

Selon une variante, le dispositif de sécurité comprend au moins un actionneur électrique configuré pour placer le dispositif de sécurité alternativement en configuration de service et en configuration de sécurité.

Selon une variante, le nombre de vannes de débit est supérieur à 20. Par exemple, le nombre de vannes de débit peut être égal à 40.

Selon une variante, le système de commande comprend en outre au moins une vanne d'alimentation configurée pour être agencée sur une canalisation destinée à débiter du fluide réactionnel, ladite au moins une vanne d'alimentation étant configurée pour présenter au moins : i) une position de fermeture et ii) une position d'ouverture dans laquelle le fluide réactionnel peut circuler dans la canalisation,

ladite au moins une vanne d'alimentation étant configurée pour passer en position d'ouverture lorsque la pression du fluide de commande dans la conduite de commande respective est inférieure à un seuil prédéterminé.

Une telle vanne d'alimentation peut par exemple être une vanne d'anti-pompage d'un compresseur qui sert à protéger le compresseur, en assurant que la sortie du compresseur serait ouverte dans le cas où la pression du fluide de commande dans la conduite de commande devient inférieure à un seuil prédéterminé.

Selon une variante, les canalisations peuvent être configurées et agencées pour débiter au moins deux fluides réactionnels différents.

De préférence, une seule vanne de débit est configurée pour être agencée sur chaque canalisation respective destinées à débiter au moins un fluide réactionnel.

Selon une variante, le dispositif de sécurité comprend une électrovanne de sécurité ayant au moins trois voies, les trois voies incluant :
i) une première voie destinée à être reliée à la source de fluide de commande,
ii) une deuxième voie reliée aux conduites de commande et
iii) une troisième voie reliée à ladite au moins une conduite d'évacuation ;
le dispositif de sécurité étant configuré pour placer l'électrovanne de sécurité alternativement :
- dans une configuration de service, dans laquelle la première voie est reliée à la deuxième voie, et
- dans une configuration de sécurité, dans laquelle la deuxième voie est reliée à la troisième voie.

En d'autres termes, le dispositif de sécurité comprend une électrovanne de sécurité à trois voies (au moins) pouvant conduire :
- le fluide de commande arrivant de la source de fluide de commande vers les conduites de commande, donc vers les vannes de débit, et
- le fluide de commande arrivant des conduites de commande, donc des vannes de débit, vers la ou chaque conduite d'évacuation.

Ainsi, une telle électrovanne de sécurité a une structure simple, compacte et économique, tout en permettant d'amener le fluide de commande vers les vannes de débit.

Selon une variante, ladite au moins une électrovanne de sécurité peut être formée par un distributeur à trois voies et à deux positions. Un tel distributeur à trois voies et à deux positions forme un bloc comportant un organe obturateur qui se déplace entre les deux positions de façon à relier sélectivement deux des trois voies.

Alternativement, ladite au moins une électrovanne de sécurité peut être formée par un distributeur ayant plus de trois voies et/ou plus de deux positions.

Selon un mode de réalisation, ledit au moins un conduit auxiliaire de commande est équipé d'une électrovanne auxiliaire de commande présentant i) une position de passage, dans laquelle le fluide de commande circule dans ledit au moins un conduit auxiliaire de commande, et ii) une position d'échappement, dans laquelle le fluide de commande s'échappe dudit au moins un conduit auxiliaire de commande,

l'électrovanne auxiliaire de commande étant configurée pour passer de la position de passage à la position d'échappement lorsque l'alimentation électrique de l'électrovanne auxiliaire de commande respective est interrompue.

Ainsi, une telle électrovanne auxiliaire de commande permet de stopper rapidement l'arrivée du fluide de commande dans les conduites de commande, donc de vite fermer chaque vanne de débit, et ainsi de vite interrompre les débits de fluide(s) réactionnel(s).

Selon un mode de réalisation, le dispositif de sécurité comprend :
- un premier et un deuxième tronçons de commande agencés en parallèle et reliés chacun auxdites conduites de commande,
- une première et une deuxième vannes de commande agencées en parallèle sur les tronçons de commande,
- un premier et un deuxième conduits auxiliaires de commande agencés en parallèle, et
- une première et une deuxième électrovannes auxiliaires de commande qui sont destinées à être reliées à la source de fluide de commande et qui sont agencées respectivement sur le premier conduit auxiliaire de commande et sur le deuxième conduit auxiliaire de commande de façon à piloter respectivement la première vanne de commande et la deuxième vanne de commande.

En d'autres termes, le dispositif de sécurité est double, ce qui assure une redondance des fonctions de commande et d'évacuation qui sont ici remplies respectivement par les deux vannes de commande et les par les deux vannes d'évacuation.

Ainsi, les électrovannes auxiliaires de commande permettent d'actionner rapidement la première et la deuxième vannes de commande.

Selon un mode de réalisation, le système de commande comprend en outre un premier et un deuxième capteurs auxiliaires de commande configurés pour générer un signal de défaillance respectivement lorsque au moins l'une parmi la première et de la deuxième vannes de commande n'atteignent pas leurs positions d'ouverture respectives.

Ainsi, de tels premier et deuxième capteurs auxiliaires de commande améliorent la fiabilité du dispositif de sécurité, car ils permettent une fonction de redondance dans la surveillance du fonctionnement normal des vannes de commande. En cas de défaillance de l'une parmi la première et la deuxième vanne de commande, l'autre peut remplir la fonction de commande.

Dans la présente demande, le terme « présence en position de fermeture » signifie que la vanne, en l'occurrence l'une des première et deuxième vannes de commande, est en position de fermeture ; en d'autres termes, ce terme signifie que la vanne est fermée.

Selon une variante, le premier capteur auxiliaire de commande est configuré pour générer un signal de défaillance lorsque la première vanne de commande est absente de la position d'ouverture, et le deuxième capteur auxiliaire de commande est configuré pour générer un signal de défaillance lorsque la deuxième vanne auxiliaire de commande est absente de la position d'ouverture. Les premier et deuxième capteurs auxiliaires de commande peuvent être formés par des capteurs de fin de course ouverts.

En cas de signal de défaillance, un opérateur de maintenance intervient pour remettre en service la vanne de commande défaillante ou pour la remplacer.

Selon un mode de réalisation, le système de commande comprend :
- une première et une deuxième vannes d'évacuation agencées en série sur une même conduite d'évacuation,
- un premier et un deuxième conduits auxiliaires d'évacuation agencés en parallèle,
- une première et une deuxième électrovannes auxiliaires d'évacuation agencées respectivement sur le premier conduit auxiliaire d'évacuation et sur le deuxième conduit auxiliaire d'évacuation de façon à piloter respectivement la première vanne d'évacuation et la deuxième vanne d'évacuation.

Ainsi, chacune des vannes d'évacuation peut fonctionner de manière indépendante, ce qui augmente la fiabilité du système de commande. En effet, il faut que les deux vannes d'évacuation s'ouvrent pour permettre l'évacuation du fluide de commande et ainsi placer la ou chaque vanne de débit en position de fermeture, donc d'interrompre le débit du fluide réactionnel dans la ou chaque canalisation. De plus, les première et deuxième électrovannes d'évacuation permettent un actionnement rapide des première et deuxième vannes d'évacuation.

Selon un mode de réalisation, le système de commande comprend en outre un premier et un deuxième capteurs auxiliaires d'évacuation agencés respectivement sur la première et sur la deuxième vannes d'évacuation, les premier et deuxième capteurs auxiliaires d'évacuation étant configurés de façon à générer un signal de défaillance respectivement lorsque au moins l'une parmi la première et de la deuxième vannes d'évacuation n'atteignent pas leurs positions de fermeture respectives.

Les premier et deuxième capteurs auxiliaires d'évacuation peuvent être formés par des capteurs de fin de course fermés.

En cas de signal de défaillance, un opérateur de maintenance intervient pour remettre en service la vanne d'évacuation défaillante ou pour la remplacer.

Ainsi, si la première vanne de d'évacuation est défaillante et s'ouvre malgré une commande de fermeture, alors le premier capteur auxiliaire d'évacuation détecte cette défaillance.

Selon une variante, le premier et le deuxième capteurs auxiliaires d'évacuation peuvent être un premier et un deuxième capteurs de fin de course agencés pour détecter la fin de la course de fermeture respectivement de la première vanne d'évacuation et de la deuxième vanne d'évacuation.

Selon un mode de réalisation, au moins une desdites vannes de débit est configurée pour présenter i) une position de fermeture et ii) une unique position d'ouverture, ladite au moins une vanne de débit étant configurée pour passer en position d'ouverture lorsque la pression du fluide de commande dans la conduite de commande respective est inférieure à un seuil prédéterminé.

Ainsi, une telle vanne de débit fonctionne en tout-ou-rien, car sa position d'ouverture permet un débit complet du fluide réactionnel dans une canalisation respective et car sa position de fermeture permet d'interrompre le débit du fluide réactionnel dans une canalisation respective.

Alternativement à ce mode de réalisation, toutes les vannes de débit peuvent être configurées pour passer en position de fermeture lorsque la pression du fluide de commande dans les conduites de commande respectives est inférieure à un seuil prédéterminé.

Selon un mode de réalisation, le système de commande comprend en outre plusieurs organes de régulation, chaque organe de régulation étant configuré pour réguler la pression du fluide de commande dans une conduite de commande respective, de façon à placer sélectivement la vanne de débit respective dans plusieurs positions d'ouverture.

Ainsi, un tel organe de régulation permet à la vanne de débit de réguler le débit du fluide réactionnel dans la canalisation. Le degré d'ouverture de la vanne de débit est fonction de la pression du fluide de commande dans la ou chaque conduite secondaire. Par exemple, le degré d'ouverture de la vanne de débit peut être proportionnel à la pression du fluide de commande dans la ou chaque conduite secondaire.

Selon une variante, l'organe de régulation est configuré pour recevoir des signaux de régulation et pour déplacer un obturateur en fonction des signaux de régulation. Les signaux de régulation sont émis par une unité centrale de commande, qui peut être par exemple formé par un ordinateur.

Les signaux de commande peuvent être des courants électriques dont l'intensité est comprise entre 4 mA et 20 mA. L'organe de régulation peut comprendre un actionneur électromécanique.

Ainsi, une telle installation d'alimentation peut fonctionner avec une grande fiabilité, ce qui est particulièrement important pour les fluides réactionnels présentant des risques pour la sécurité des personnes ou des biens.

Par ailleurs, la présente invention a pour objet une installation d'alimentation en fluide réactionnel, pour alimenter en au moins un fluide réactionnel au moins un organe de consommation, un fluide réactionnel pouvant par exemple être un hydrocarbure, l'installation d'alimentation en fluide réactionnel comprenant au moins :
- un conteneur configuré pour contenir du fluide réactionnel,
- plusieurs canalisations reliées audit au moins un conteneur et configurées pour la circulation dudit au moins un fluide réactionnel,
- un système de commande selon l'invention, chaque vanne de débit étant agencée pour empêcher ou autoriser sélectivement la circulation dudit au moins un fluide réactionnel dans une canalisation respective, et
une source de fluide de commande configurée pour fournir un fluide de commande au système de commande.

Ainsi, une telle installation d'alimentation en fluide réactionnel présente une grande sécurité de fonctionnement. En effet, la première et la deuxième vanne de débit permettent une double coupure ou isolation sur une même canalisation, et la vanne d'échappement permet de diriger le fluide réactionnel vers une voie de rejet, en cas de défaillance dans une partie située en aval de l'installation.
Selon un mode de réalisation, l'installation d'alimentation en fluide réactionnel comprend une première et une deuxième canalisations qui sont reliées en un point de jonction, le système de commande comprenant une première et une deuxième vannes de débit agencées sur la première canalisation respectivement de part et d'autre du point de jonction,
chacune des vannes de débit étant configurée pour présenter i) une position de fermeture et ii) au moins une position d'ouverture, les vannes de débit étant configurées pour passer en position de fermeture lorsque la pression du fluide de commande dans la conduite de commande respective est inférieure à une pression prédéterminée,
le système de commande comprenant en outre une vanne d'échappement agencée sur la deuxième canalisation de façon à débiter dudit au moins un fluide réactionnel dans la deuxième canalisation, la deuxième canalisation étant destinée à être reliée à une voie de rejet,
la vanne d'échappement étant reliée à une conduite de commande, la vanne d'échappement étant configurée pour présenter i) une position de fermeture et ii) au moins une position d'ouverture, la vanne d'échappement étant configurée pour passer en position d'ouverture lorsque la pression du fluide de commande dans la conduite de commande est inférieure à une pression prédéterminée.

Ainsi, un tel procédé d'alimentation permet de faire fonctionner l'installation d'alimentation avec une grande sécurité de fonctionnement.

Selon une variante, la voie de rejet peut déboucher dans un conteneur de secours, dans une cheminée de mise à l'atmosphère ou dans une torchère.

Par ailleurs, la présente invention a pour objet un procédé d'alimentation, pour alimenter au moins un organe de consommation en au moins un fluide réactionnel, ledit au moins un fluide réactionnel pouvant par exemple être un hydrocarbure, le procédé d'alimentation comprenant les étapes :
- fournir une installation d'alimentation en fluide réactionnel selon l'invention,
- relier chacune desdites conduites de commande à la source de fluide de commande,
- placer le dispositif de sécurité en configuration de service,
- soumettre chacune desdites conduites de commande à une pression du fluide de commande supérieure à un seuil prédéterminé, de façon à placer chaque vanne de débit dans des positions d'ouverture respectives, et ainsi à débiter dudit au moins un fluide réactionnel dans les canalisations.
   Ainsi, un tel procédé d'alimentation permet d'alimenter en fluide réactionnel des organes de consommation, avec un coût réduit et une fiabilité augmentée.
- Selon l'invention, un procédé de séparation d'air par distillation cryogénique comprend un système de commande selon une des revendications 1 à 8.

Les modes de réalisation et les variantes mentionnés ci-avant peuvent être pris isolément ou selon toute combinaison techniquement possible.

La présente invention sera bien comprise et ses avantages ressortiront aussi à la lumière de la description qui va suivre, donnée uniquement à titre d'exemple non limitatif et faite en référence aux figures annexées, dans lesquelles des signes de références identiques correspondent à des éléments structurellement et/ou fonctionnellement identiques ou similaires. Dans les figures annexées :
- la figure 1 est une vue schématique d'une installation d'alimentation en fluide réactionnel et qui comprend un système de commande ;
- la figure 2 est une vue schématique d'une vanne de débit appartenant au système de commande de la figure 1, en position d'ouverture ; cette vanne de débit est fermée par manque de fluide de commande ;
- la figure 3 est une vue schématique de la vanne de débit de la figure 2, en position de fermeture ;
- la figure 4 est une vue schématique d'une installation d'alimentation en fluide réactionnel qui est conforme à un premier mode de réalisation et qui comprend un système de commande conforme au premier mode de réalisation ;
- la figure 5 est une vue schématique d'une vanne d'évacuation appartenant au système de commande de la figure 2, en position de fermeture ; cette vanne d'évacuation est ouverte par manque de fluide de commande ;
- la figure 6 est une vue schématique de la vanne d'évacuation de la figure 5, en position d'ouverture ;
- la figure 7 est une vue schématique d'une installation d'alimentation en fluide réactionnel qui est conforme à un deuxième mode de réalisation et qui comprend un système de commande conforme au deuxième mode de réalisation ;
- la figure 8 est une vue schématique d'une installation d'alimentation en fluide réactionnel qui est conforme à un troisième mode de réalisation et qui comprend un système de commande conforme au troisième mode de réalisation ; et
- la figure 9 est un organigramme illustrant un procédé d'alimentation conforme à l'invention.

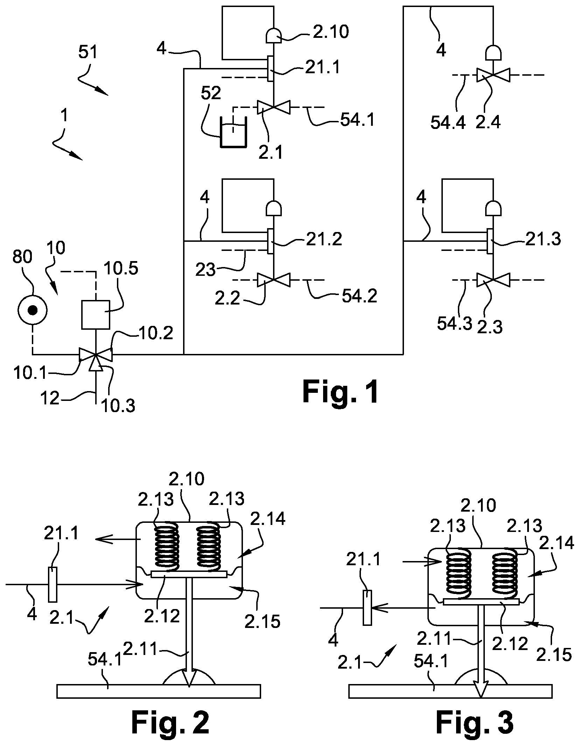

La figure 1 illustre une installation d'alimentation en fluide réactionnel 51 comprenant un système de commande 1. L'installation d'alimentation en fluide réactionnel 51 a notamment pour fonction d'alimenter en fluide réactionnel un ou plusieurs organe(s) de consommation non représenté(s). Par exemple, le fluide réactionnel est ici un hydrocarbure (CnHm).

Le système de commande 1 a notamment pour fonction de commander la circulation d'un fluide réactionnel dans une installation d'alimentation en fluide réactionnel. Le système de commande 1 comprend plusieurs vannes de débit 2.1, 2.2, 2.3 et 2.4 et plusieurs conduites de commande 4.

Les vannes de débit 2.1, 2.2, 2.3 et 2.4 sont configurées pour être agencées sur des canalisations respectives 54.1, 54.2, 54.3 et 54.4 destinées à débiter du fluide réactionnel. Chacune des vannes de débit 2.1, 2.2, 2.3 et 2.4 est configurée pour présenter i) une position de fermeture et ii) une position d'ouverture.

Par exemple chaque canalisation peut contenir un débit du même fluide ou chaque canalisation peut contenir un débit de composition différente. Par exemple dans un appareil de distillation d'air, la canalisation 54.1 peut être une canalisation d'azote liquide, la canalisation 54.2 peut être une canalisation d'air à séparer, la canalisation 54.3 peut être une canalisation de liquide enrichi en oxygène qui a été vaporisé et la canalisation 54.4 peut être une canalisation de liquide riche en oxygène.

Lorsqu'une vanne de débit est en position de fermeture, le fluide réactionnel ne peut pas circuler dans la canalisation respective 54.1, 54.2, 54.3 ou 54.4. Lorsqu'une vanne de débit est en position d'ouverture, le fluide réactionnel peut circuler dans la canalisation respective 54.1, 54.2, 54.3 ou 54.4.

Les conduites de commande 4 sont destinées à être reliées à une source de fluide de commande 80. Par exemple, le fluide de commande est ici de l'air comprimé. Chaque vanne de débit 2.1, 2.2, 2.3 et 2.4 est reliée à une conduite de commande respective 4. Plusieurs des vannes de débit 2.1, 2.2, 2.3 et 2.4 sont configurées pour passer en position de fermeture totale (débit nul) lorsque la pression du fluide de commande dans les conduites de commande respectives 4 est inférieure à un seuil prédéterminé (vanne fermée par manque de fluide de commande ou vanne normalement fermée). Ce seuil prédéterminé peut être par exemple une pression de fluide de commande inférieure à 3 bars relatifs ou à 2 bars relatifs.

Le système de commande 1 comprend en outre une conduite d'évacuation 12 qui est reliée à chacune des conduites de commande 4, de façon à permettre une évacuation du fluide de commande hors de chaque conduite de commande 4.

De plus, le système de commande 1 comprend un dispositif de sécurité 10 qui est relié i) à chaque conduite de commande 4 et ii) à la conduite d'évacuation 12. Le dispositif de sécurité 10 est configuré pour présenter sélectivement :
i) une configuration de service, dans laquelle le fluide de commande peut circuler jusqu'à chaque conduite de commande 4 de sorte que chacune des vannes 2.1, 2.2, 2.3 et 2.4 peut être placée dans une position d'ouverture respective, et
ii) une configuration de sécurité, dans laquelle le fluide de commande peut circuler depuis chacune des vannes de débit 2.1, 2.2, 2.3 et 2.4 à travers la conduite d'évacuation 12 de sorte que lesdites vannes de débit 2.1, 2.2, 2.3 ou 2.4 sont placées en position de fermeture lorsque la pression du fluide de commande dans les conduite de commande respectives 4 est inférieure au seuil prédéterminé.

Dans l'exemple de la figure 1, le dispositif de sécurité 10 comprend une électrovanne de sécurité présentant trois voies, les trois voies incluant :
i) une première voie 10.1 reliée à la source de fluide de commande 80,
ii) une deuxième voie 10.2 reliée aux conduites de commande 4, et
iii) une troisième voie 10.3 reliée à la conduite d'évacuation 12.

Le dispositif de sécurité 10 est configuré pour placer l'électrovanne de sécurité alternativement :
- dans une configuration de service, dans laquelle la première voie 10.1 est reliée à la deuxième voie 10.2, et
- dans une configuration de sécurité, dans laquelle la deuxième voie 10.2 est reliée à la troisième voie 10.3.

L'électrovanne de sécurité formant le dispositif de sécurité 10 est ici formée par un distributeur à trois voies et à deux positions (distributeur usuellement dénommé « 3/2 »). L'électrovanne de sécurité comprend un organe obturateur non représenté qui se déplace entre les deux positions de façon à relier sélectivement deux des trois voies : soit la première voie 10.1 et la deuxième voie 10.2, lorsque le dispositif de sécurité 10 est en configuration de service, soit la deuxième voie 10.2 et la troisième voie 10.3, lorsque le dispositif de sécurité 10 est en configuration de sécurité.

Pour déplacer l'organe obturateur entre ses deux positions, l'électrovanne de sécurité comprend un actionneur électrique 10.5 qui peut être commandé par un signal de commande, par exemple sous la forme d'une tension électrique de 0 ou 24 V.

L'une des vannes de débit 2.1, 2.2, 2.3 et 2.4 peut être configurée pour présenter i) une position de fermeture et ii) une unique position d'ouverture, comme par exemple la vanne de débit 2.4 représentée en haut à droite sur la figure 1. Cette vanne de débit 2.4 est configurée pour passer en position d'ouverture lorsque la pression du fluide de commande dans la conduite de commande respective 4 est supérieure à un seuil prédéterminé. Ce seuil prédéterminé peut être par exemple une pression de fluide de commande supérieure à 2 bars relatifs ou à 3 bars relatifs.

Le système de commande 1 peut en outre comprendre plusieurs organes de régulation 21.1, 21.2 et 21.3 qui sont configurés pour réguler la pression du fluide de commande dans des conduites de commande respectives 4. En régulant la pression du fluide de commande, les organes de régulation 21.1, 21.2 et 21.3 permettent de placer sélectivement les vannes de débit respectives 2.1, 2.2, 2.3 et 2.4 dans leurs positions d'ouverture. Chaque organe de régulation 21.1, 21.2 et 21.3 est ici commandé par un signal de commande qui peut par exemple être porté par un courant électrique 4-20 mA, par exemple via un fil 23.

L'installation d'alimentation en fluide réactionnel 51 comprend en outre un conteneur 52 de fluide réactionnel et une source de fluide de commande 80 pour le système de commande 1. Le conteneur 52 de fluide réactionnel peut être formé par n'importe quel type de source de fluide réactionnel.

De plus, l'installation d'alimentation en fluide réactionnel 51 comprend plusieurs canalisations 54.1, 54.2, 54.3 et 54.4 qui sont reliées au conteneur 52 et qui sont configurées pour la circulation du fluide réactionnel. Dans l'exemple de la figure 1, chaque canalisation 54.1, 54.2, 54.3 et 54.4 est reliée au même conteneur 52. Alternativement, l'installation d'alimentation en fluide réactionnel peut comprendre des canalisations reliées à des conteneurs respectifs contenant des fluides réactionnels différents.

Lorsque l'installation d'alimentation en fluide réactionnel 51 est en service, le dispositif de sécurité 10 est en configuration de service, si bien que chaque vanne de débit 2.1 à 2.4 peut empêcher ou autoriser la circulation du fluide réactionnel dans les canalisations respectives 54.1, 54.2, 54.3 et 54.4, sélectivement en fonction des signaux de commande transmis par exemple via le fil 23 et équivalents.

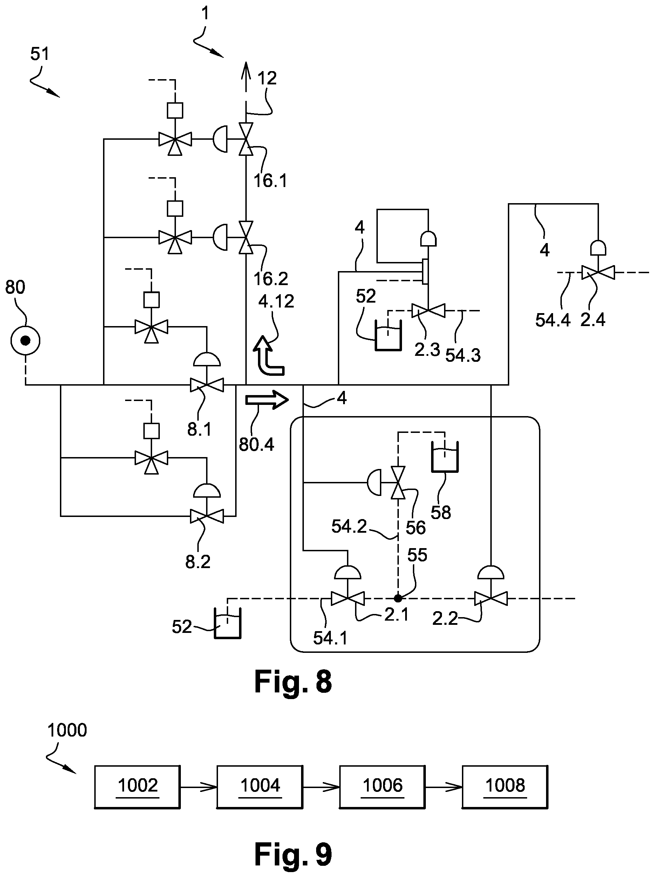

L'installation d'alimentation en fluide réactionnel 51 en service fonctionne suivant un procédé d'alimentation 1000 conforme à l'invention et illustré à la figure 9. Le procédé d'alimentation 1000 a notamment pour fonction d'alimenter un ou plusieurs organe(s) de consommation en fluide réactionnel.

Le procédé d'alimentation 1000 comprend les étapes :
- 1002) fournir l'installation d'alimentation en fluide réactionnel 51,
- 1004) relier chaque conduite de commande 4 à la source de fluide de commande 80,
- 1006) placer le dispositif de sécurité 10 en configuration de service,
- 1008) soumettre chaque conduite de commande 4 à une pression du fluide de commande supérieure au seuil prédéterminé, de façon à placer chaque vanne de débit 2.1, 2.2, 2.3 et 2.4 dans des positions d'ouverture respectives, et ainsi à débiter du fluide réactionnel dans les canalisations 54.1, 54.2, 54.3 et 54.4.

Comme le montrent les figures 1 et 2, une vanne de débit 2.1 comprend une partie de commande 2.10 et un obturateur 2.11. Les figures 2 et 3 illustrent schématiquement la structure et le fonctionnement de la vanne de débit 2.1, 2.2, 2.3 et 2.4 agencée sur une canalisation respective 54.1, 54.2, 54.3 ou 54.4. L'obturateur 2.11 est mobile entre :
- une position d'ouverture (figure 2) de la vanne de débit 2.1, dans laquelle l'obturateur 2.11 permet au fluide réactionnel de circuler dans la canalisation 54.1, et
- une position de fermeture (figure 3) de la vanne de débit 2.1, dans laquelle l'obturateur 2.11 empêche le fluide réactionnel de circuler dans la canalisation 54.1.

La partie de commande 2.10 présente une première chambre 2.14 et une deuxième chambre 2.15, qui ont des volumes variables en fonction de la pression du fluide de commande conduit par la conduite de commande 4. La première chambre 2.14 est reliée à la conduite de commande 4 par l'intermédiaire de l'organe de régulation 21.

La partie de commande 2.10 comprend un piston 2.12 et un organe de rappel 2.13. Le piston 2.12 est disposé entre la première chambre 2.14 et la deuxième chambre 2.15. Le piston 2.12 est lié mécaniquement à l'obturateur 2.11, de sorte que le piston 2.12 déplace l'obturateur 2.11 entre les positions d'ouverture (figure 2) et de fermeture (figure 3). L'organe de rappel 2.13 est agencé pour repousser le piston 2.12 de façon à placer la vanne de débit 2.1 en position de fermeture (figure 3).

Pour placer la vanne de débit 2.1 en position d'ouverture (figure 2), on applique dans la conduite de commande 4 et dans la deuxième chambre 2.15, donc sur le piston 2.12 et contre l'organe de rappel 2.13, une pression de fluide de commande supérieure au seuil déterminé. Le fluide réactionnel peut alors circuler dans la canalisation 54.1, le dispositif de sécurité 10 étant placé en configuration de service.

Puis, lorsqu'on relâche la pression du fluide de commande dans la conduite de commande 4, la pression du fluide de commande devient inférieure au seuil déterminé. Alors, l'organe de rappel 2.13 repousse le piston 2.12 et l'obturateur 2.11, ce qui place la vanne de débit 2.1 en position de fermeture (figure 3). C'est par exemple le cas lorsque le dispositif de sécurité 10 est placé en configuration de sécurité.

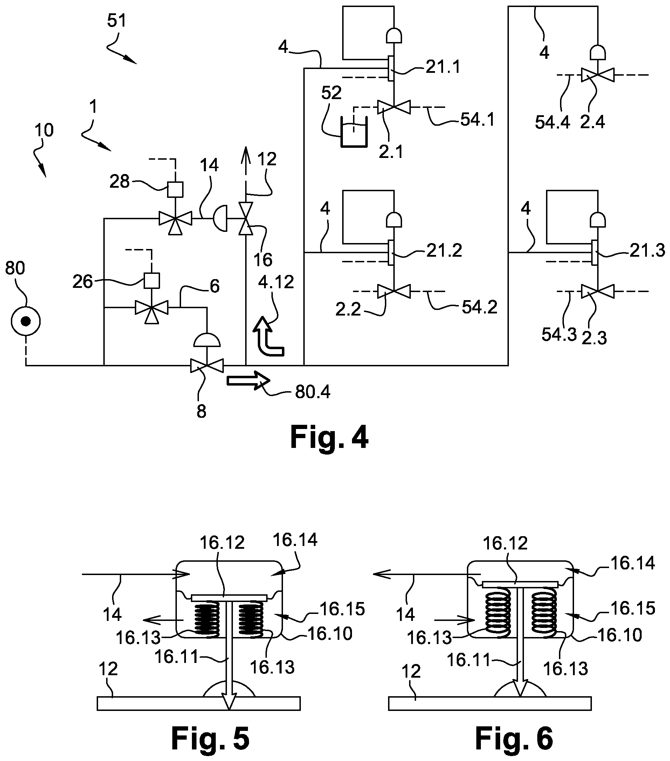

La figure 4 illustre une installation d'alimentation en fluide réactionnel 51 conforme à un premier mode de réalisation et comprenant un système de commande 1 conforme au premier mode de réalisation. Dans la mesure où l'installation d'alimentation en fluide réactionnel 51 et le système de commande 1 de la figure 4 sont similaires à l'installation d'alimentation en fluide réactionnel 51 et au système de commande 1 de la figure 1, la description de l'installation d'alimentation en fluide réactionnel 51 et du système de commande 1 donnée ci-avant en relation avec la figure 1 peut être transposée à l'installation d'alimentation en fluide réactionnel 51 et au système de commande 1 de la figure 4, à l'exception des différences notables énoncées ci-après.

L'installation d'alimentation en fluide réactionnel 51 et le système de commande 1 de la figure 4 comprennent ainsi des vannes de débit 2.1, 2.2, 2.3 et 2.4, des conduites de commande 4, un dispositif de sécurité 10, une conduite d'évacuation 12, un conteneur 52 avec du fluide réactionnel, des canalisations 54.1, 54.2, 54.3 et 54.4 et une source de fluide de commande 80.

L'installation d'alimentation en fluide réactionnel 51 de la figure 4 diffère de l'installation d'alimentation en fluide réactionnel 51 de la figure 1, notamment car le système de commande 1 de la figure 4 diffère du système de commande 1 de la figure 1. Le système de commande 1 de la figure 4 diffère du système de commande 1 de la figure 1, notamment car le dispositif de sécurité 10 de la figure 4 diffère du dispositif de sécurité 10 de la figure 1. En effet, le dispositif de sécurité 10 comprend un conduit auxiliaire de commande 6, une vanne de commande 8, un conduit auxiliaire d'évacuation 14 et une vanne d'évacuation 16.

Le conduit auxiliaire de commande 6 est relié à la source de fluide de commande 80. La vanne de commande 8 est reliée à chaque conduite de commande 4. La vanne de commande 8 comprend un organe d'obturation qui est relié au conduit auxiliaire de commande 6.

L'organe d'obturation est configuré pour placer la vanne de commande 8 sélectivement i) dans une position de fermeture et ii) dans une position d'ouverture. La vanne de commande 8 est configurée pour passer en position de fermeture lorsque la pression du fluide de commande dans le conduit auxiliaire de commande 6 est inférieure à un seuil de sécurité prédéterminé, par exemple inférieure à 2 ou 3 bars relatifs. Donc la vanne de commande 8 fonctionne comme la vanne de débit 2.1 illustrée aux figures 2 et 3 (vanne fermée par manque de fluide de commande).

Lorsque l'installation d'alimentation en fluide réactionnel 51 de la figure 4 est assemblée, avec le système de commande 1, le conduit auxiliaire d'évacuation 14 est relié à la source de fluide de commande 80.

La vanne d'évacuation 16 est agencée sur la conduite d'évacuation 12. La vanne d'évacuation 16 comprend un membre d'obturation qui est relié au conduit auxiliaire d'évacuation 14. Le membre d'obturation est configuré pour placer sélectivement la vanne d'évacuation 16 dans une position de fermeture et ii) dans une position d'ouverture. La vanne d'évacuation 16 est configurée pour passer en position d'ouverture lorsque la pression du fluide de commande dans le conduit auxiliaire d'évacuation 14 est inférieure à un seuil d'évacuation prédéterminé, par exemple à 2 ou 3 bars relatifs.

Les figures 5 et 6 illustrent schématiquement la structure et le fonctionnement de la vanne d'évacuation 16. La vanne d'évacuation 16 comprend une partie de commande 16.10 et un obturateur 16.11. La vanne d'évacuation 16 est agencée sur la conduite d'évacuation 12. L'obturateur 16.11 est mobile entre :
- une position de fermeture (figure 5) de la vanne d'évacuation 16, dans laquelle l'obturateur 16.11 empêche le fluide réactionnel de circuler dans la conduite d'évacuation 12, et
- une position d'ouverture (figure 6) de la vanne d'évacuation 16, dans laquelle l'obturateur 16.11 permet au fluide réactionnel de circuler dans la conduite d'évacuation 12.

La partie de commande 16.10 présente une première chambre 16.14 et une deuxième chambre 16.15, qui ont des volumes variables en fonction de la pression du fluide de commande conduit par le conduit auxiliaire de commande 14. La première chambre 16.14 est reliée au conduit auxiliaire de commande 14.

La partie de commande 16.10 comprend un piston 16.12 et un organe de rappel 16.13. Le piston 16.12 est disposé entre la première chambre 16.14 et la deuxième chambre 16.15. Le piston 16.12 est lié mécaniquement à l'obturateur 16.11, de sorte que le piston 16.12 déplace l'obturateur 16.11 entre les positions d'ouverture (figure 6) et de fermeture (figure 5). L'organe de rappel 16.13 est agencé pour repousser le piston 16.12 de façon à placer la vanne d'évacuation 16 en position d'ouverture (figure 6).

Pour placer la vanne d'évacuation 16 en position de fermeture (figure 5), on applique dans le conduit auxiliaire de commande 14 et dans la deuxième chambre 16.15, donc sur le piston 16.12 et contre l'organe de rappel 16.13, une pression de fluide de commande supérieure au seuil déterminé. Le fluide de commande ne peut alors pas circuler dans la conduite d'évacuation 12, le dispositif de sécurité 10 étant placé en configuration de service.

Puis, lorsqu'on relâche la pression du fluide de commande dans le conduit auxiliaire de commande 14, la pression du fluide de commande devient inférieure au seuil déterminé. Alors, l'organe de rappel 16.13 repousse le piston 16.12 et l'obturateur 16.11, ce qui place la vanne d'évacuation 16 en position d'ouverture (figure 6). C'est par exemple le cas lorsque le dispositif de sécurité 10 est placé en configuration de sécurité.

Le conduit auxiliaire de commande 6 est équipé d'une électrovanne auxiliaire de commande 26 qui présente i) une position de passage, dans laquelle le fluide de commande circule dans le conduit auxiliaire de commande 6, et ii) une position d'échappement, dans laquelle le fluide de commande s'échappe du conduit auxiliaire de commande 6. L'électrovanne auxiliaire de commande 26 est configurée pour passer de la position de passage à la position d'échappement lorsque l'alimentation électrique de l'électrovanne auxiliaire de commande 26 est interrompue.

De même, le conduit auxiliaire d'évacuation 14 est équipé d'une électrovanne auxiliaire d'évacuation 28 qui présente i) une position de passage, dans laquelle le fluide de commande circule dans le conduit auxiliaire d'évacuation 14, et ii) une position d'échappement, dans laquelle le fluide de commande s'échappe du conduit auxiliaire d'évacuation 14. L'électrovanne auxiliaire d'évacuation 28 est configurée pour passer de la position de passage à la position d'échappement lorsque l'alimentation électrique de l'électrovanne auxiliaire d'évacuation 28 est interrompue.

Lorsque l'installation d'alimentation en fluide réactionnel 51 est en service, le dispositif de sécurité 10 est en configuration de service. La vanne de commande 8 est alors ouverte ou passante, tandis que la vanne d'évacuation 16 est fermée, de sorte que le fluide de commande circule depuis la source de fluide de commande 80 dans les conduites de commande 4 et jusqu'aux vannes de débit 2.1, 2.2, 2.3 et 2.4, suivant le sens indiqué par la flèche 80.4 à la figure 4.

En cas d'incident, le dispositif de sécurité 10 passe en configuration de sécurité. La vanne de commande 8 est alors fermée, tandis que la vanne d'évacuation 16 est ouverte, de sorte que le fluide de commande est évacué des conduites de commande 4 et à travers la conduite d'évacuation 12, suivant le sens indiqué par la flèche 4.12 à la figure 4.

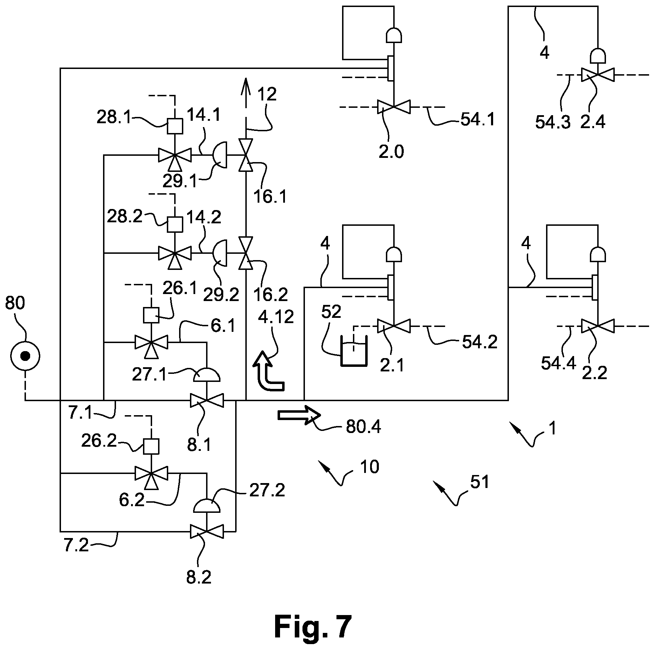

La figure 7 illustre une installation d'alimentation en fluide réactionnel 51 conforme à un deuxième mode de réalisation et comprenant un système de commande 1 conforme au deuxième mode de réalisation. Dans la mesure où l'installation d'alimentation en fluide réactionnel 51 et le système de commande 1 de la figure 7 sont similaires à l'installation d'alimentation en fluide réactionnel 51 et au système de commande 1 de la figure 4, la description de l'installation d'alimentation en fluide réactionnel 51 et du système de commande 1 donnée ci-avant en relation avec les figures 4 à 6 peut être transposée à l'installation d'alimentation en fluide réactionnel 51 et au système de commande 1 de la figure 7, à l'exception des différences notables énoncées ci-après.

L'installation d'alimentation en fluide réactionnel 51 et le système de commande 1 de la figure 7 comprennent ainsi des vannes de débit 2.1, 2.2 et 2.4, des conduites de commande 4, un dispositif de sécurité 10, une conduite d'évacuation 12, un conteneur 52 contenant du fluide réactionnel, des canalisations 54.1, 54.2, 54.3 et 54.4 et une source de fluide de commande 80.

L'installation d'alimentation en fluide réactionnel 51 de la figure 7 diffère de l'installation d'alimentation en fluide réactionnel 51 de la figure 4, notamment car le système de commande 1 diffère du système de commande 1. Le système de commande 1 de la figure 7 diffère du système de commande 1 de la figure 4, notamment car le dispositif de sécurité 10 de la figure 7 diffère du dispositif de sécurité 10 de la figure 4. En effet, le dispositif de sécurité 10 de la figure 7 comprend :
- un premier et un deuxième tronçons de commande 7.1 et 7.2 agencés en parallèle et reliés chacun aux conduites de commande 4,
- une première et une deuxième vannes de commande 8.1 et 8.2 agencées en parallèle sur les premier et deuxième tronçons de commande 7.1 et 7.2,
- un premier et un deuxième conduits auxiliaires de commande 6.1 et 6.2 agencés en parallèle, et
- une première et une deuxième électrovannes auxiliaires de commande 26.1 et 26.2 agencées respectivement sur le premier conduit auxiliaire de commande 6.1 et sur le deuxième conduit auxiliaire de commande 6.2 de façon à piloter respectivement la première vanne de commande 8.1 et la deuxième vanne de commande 8.2.

En outre, le système de commande 1 de la figure 7 comprend un premier et un deuxième capteurs auxiliaires de commande 27.1 et 27.2 qui sont configurés de façon à générer un signal de défaillance respectivement lorsque au moins l'une parmi la première et de la deuxième vannes de commande 8.1 et 8.2 n'atteignent pas leurs positions d'ouverture respectives.

En cas d'incident, par exemple si la première électrovanne auxiliaire de commande 26.1 ne reste pas en position ouverte, alors le premier capteur auxiliaire de commande 27.1 détecte l'absence de fin de course d'ouverture de la première vanne de commande 8.1, et le premier capteur auxiliaire de commande 27.1 génère un signal d'alarme pour qu'un opérateur de maintenance effectue des opérations de maintenance. La deuxième vanne de commande 8.1 reste ouverte, ce qui garantit l'arrivée du fluide de commande dans les conduites de commande 4 et jusqu'aux vannes de débit 2.1, 2.2 et 2.4.

De plus, le système de commande 1 de la figure 7 diffère du système de commande 1 de la figure 4, notamment car le dispositif de sécurité 10 de la figure 7 comprend :
- une première et une deuxième vannes d'évacuation 16.1 et 16.2 agencées en série sur une même conduite d'évacuation 12,
- un premier et un deuxième conduits auxiliaires d'évacuation 14.1 et 14.2 agencés en parallèle,
- une première et une deuxième électrovannes auxiliaires d'évacuation 28.1 et 28.2 agencées respectivement sur le premier conduit auxiliaire d'évacuation 14.1 et sur le deuxième conduit auxiliaire d'évacuation 14.2 de façon à piloter respectivement la première vanne d'évacuation 16.1 et la deuxième vanne d'évacuation 16.2.

En outre, le système de commande 1 de la figure 7 comprend un premier et un deuxième capteurs auxiliaires d'évacuation 29.1 et 29.2. Les premier et deuxième capteurs auxiliaires d'évacuation 29.1 et 29.2 sont configurés de façon à générer un signal de défaillance respectivement lorsque au moins l'une parmi la première et de la deuxième vannes d'évacuation 28.1 et 28.2 n'atteignent pas leurs positions de fermeture respectives.

En cas d'incident, par exemple si la première électrovanne auxiliaire d'évacuation 28.1 ne reste pas en position fermée, alors le premier capteur auxiliaire de commande 29.1 détecte l'absence de fin de course de fermeture de la vanne d'évacuation 16.1, puis le premier capteur auxiliaire de commande 29.1 génère un signal d'alarme pour qu'un opérateur de maintenance effectue des opérations de maintenance. La deuxième vanne d'évacuation 16.2 reste fermée ce qui évite l'évacuation du fluide commande vers la conduite d'évacuation 12, et donc garantit l'arrivée du fluide de commande dans les conduites de commande 4 et jusqu'aux vannes de débit 2.1, 2.2 et 2.4.

Lorsque l'installation d'alimentation en fluide réactionnel 51 de la figure 7 est en service, le dispositif de sécurité 10 est en configuration de service. Au moins une vanne de commande 8.1 et 8.2 est alors ouverte ou passante, tandis qu'au moins une vanne d'évacuation 16.1 ou 16.2 est fermée, de sorte que le fluide de commande circule depuis la source de fluide de commande 80 dans les conduites de commande 4 et jusqu'aux vannes de débit 2.1, 2.2 et 2.4, suivant le sens indiqué par la flèche 80.4 à la figure 7.

En cas d'incident, le dispositif de sécurité 10 passe en configuration de sécurité en plaçant toutes les vannes en configuration de sécurité. Chaque vanne de commande 8.1 et 8.2 est alors fermée, tandis que les vannes d'évacuation 16.1 et 16.2 sont ouvertes, de sorte que le fluide de commande est évacué des conduites de commande 4 et à travers la conduite d'évacuation 12, suivant le sens indiqué par la flèche 4.12 à la figure 7.

De plus, l'installation d'alimentation en fluide réactionnel 51 de la figure 7 diffère de l'installation d'alimentation en fluide réactionnel 51 de la figure 4, car l'installation d'alimentation en fluide réactionnel 51 de la figure 7 comprend au moins une vanne de débit 2.0 qui n'est pas reliée à une conduite de commande car elle est disposée en amont du dispositif de sécurité 10. Une telle vanne de débit 2.0 peut être actionnée de manière indépendante, ce qui permet par exemple de mettre en sécurité toute l'installation d'alimentation tout en gardant un contrôle sur la vanne de débit 2.0.

La figure 8 illustre une installation d'alimentation en fluide réactionnel 51 conforme à un troisième mode de réalisation. Dans la mesure où l'installation d'alimentation en fluide réactionnel 51 de la figure 8 est similaire à l'installation d'alimentation en fluide réactionnel 51 de la figure 7, la description de l'installation d'alimentation en fluide réactionnel 51 donnée ci-avant en relation avec la figure 7 peut être transposée à l'installation d'alimentation en fluide réactionnel 51 de la figure 8, à l'exception des différences notables énoncées ci-après.

L'installation d'alimentation en fluide réactionnel 51 de la figure 8 comprend ainsi un système de commande 1, des vannes de débit 2.1 et 2.4, des conduites de commande 4, un dispositif de sécurité 10, une conduite d'évacuation 12, une première et une deuxième vannes de commande 8.1 et 8.2, une première et une deuxième vannes d'évacuation 16.1 et 16.2, un conteneur 52 avec du fluide réactionnel, des canalisations 54.1, 54.2, 54.3 et 54.4 et une source de fluide de commande 80.

L'installation d'alimentation en fluide réactionnel 51 de la figure 8 diffère de l'installation d'alimentation en fluide réactionnel 51 de la figure 7, notamment car l'installation d'alimentation en fluide réactionnel 51 de la figure 8 comprend une première et une deuxième canalisations 54.1 et 54.2 qui sont reliées en un point de jonction 55.

La première canalisation 54.1 est reliée au conteneur 52. La deuxième canalisation 54.2 débouche dans une voie de rejet, ici dans un conteneur de secours 58.

De plus, le système de commande 1 de la figure 8 diffère du système de commande 1 de la figure 7, notamment car le système de commande 1 de la figure 8 comprend une première et une deuxième vannes de débit 2.1 et 2.2 agencées sur la première canalisation 54.1 respectivement de part et d'autre du point de jonction 55.

De plus, la première et la deuxième vannes de débit 2.1 et 2.2 sont configurées pour passer en position de fermeture lorsque la pression du fluide de commande dans la conduite de commande 4 est inférieure à une pression prédéterminée, par exemple inférieure à 2 ou 3 bars relatifs.

Le système de commande 1 de la figure 8 comprend en outre une vanne d'échappement 56 agencée sur la deuxième canalisation 54.2 de façon à débiter du fluide réactionnel dans la deuxième canalisation 54.2. La vanne d'échappement 56 est reliée à une conduite de commande 4.

La vanne d'échappement 56 est configurée pour présenter i) une position de fermeture et ii) une position d'ouverture. De plus, la vanne d'échappement 56 est configurée pour passer en position d'ouverture lorsque la pression du fluide de commande dans la conduite de commande 4 est inférieure à une pression prédéterminée, par exemple inférieure à 2 ou 3 bars relatifs.

Bien entendu, la présente invention n'est pas limitée aux modes de réalisation particuliers décrits dans la présente demande de brevet, ni à des modes de réalisation à la portée de l'homme du métier. D'autres modes de réalisation peuvent être envisagés sans sortir du cadre de l'invention tel que définit par les revendications, à partir de tout élément structurellement ou fonctionnellement équivalent à un élément indiqué dans la présente demande de brevet.

## Revendications

1. Système de commande (1), pour commander la circulation d'au moins un fluide réactionnel dans une installation d'alimentation en fluide réactionnel, le système de commande (1) comprenant :
- plusieurs vannes de débit (2.1, 2.2, 2.3, 2.4) configurées pour être agencées sur des canalisations respectives (54.1, 54.2, 54.3, 54.4) destinées à débiter au moins un fluide réactionnel, chacune desdites vannes de débit (2.1-2.4) étant configurée pour présenter au moins: i) une position de fermeture et ii) une position d'ouverture dans laquelle ledit au moins un fluide réactionnel peut circuler dans la canalisation respective (54.1.-54.4),
- plusieurs conduites de commande (4) destinées à être reliées à une source de fluide de commande (80), le fluide de commande pouvant par exemple être de l'air comprimé, chacune desdites vannes de débit (2.1-2.4) étant reliée à une conduite de commande respective (4), plusieurs desdites vannes de débit (2.1-2.4) étant configurées pour passer en position de fermeture lorsque la pression du fluide de commande dans la conduite de commande respective (4) est inférieure à un seuil prédéterminé, le système de commande (1) comprenant en outre :
- au moins une conduite d'évacuation (12) reliée à chacune desdites conduites de commande (4), de façon à permettre une évacuation du fluide de commande hors de chaque conduite de commande (4),
- un dispositif de sécurité (10) relié i) à chaque conduite de commande (4) Z et ii) à ladite au moins une conduite d'évacuation (12), le dispositif de sécurité (10) étant configuré pour présenter sélectivement :
i) au moins une configuration de service, dans laquelle le fluide de commande peut circuler jusqu'à chaque conduite de commande (4) de sorte que chacune desdites vannes de débit (2.1-2.4) peut être placée dans une position d'ouverture respective, et
ii) une configuration de sécurité, dans laquelle le fluide de commande peut circuler depuis chacune desdites vannes de débit (2.1-2.4) à travers ladite au moins une conduite d'évacuation (12) de sorte que lesdites vannes de débit (2.1-2.4) sont placées en position de fermeture lorsque la pression du fluide de commande dans lesdites conduites de commande (2.1-2.4) est inférieure au seuil prédéterminé, le dispositif de sécurité (10) comprenant en outre au moins :
- un conduit auxiliaire de commande (6 ; 6.1, 6.2) destiné à être relié à la source de fluide de commande (80),
- au moins une vanne de commande (8 ; 8.1, 8.2) reliée à chaque conduite de commande (4), ladite au moins une vanne de commande (8 ; 8.1, 8.2) comprenant un organe d'obturation relié au conduit auxiliaire de commande (6 ; 6.1, 6.2), l'organe d'obturation étant configuré pour placer sélectivement ladite au moins une vanne de commande (8 ; 8.1, 8.2) i) dans une position de fermeture et ii) dans au moins une position d'ouverture, ladite au moins une vanne de commande (8 ; 8.1, 8.2) étant configurée pour passer en position de fermeture lorsque la pression du fluide de commande dans le conduit auxiliaire de commande (6 ; 6.1, 6.2) est inférieure à un seuil de sécurité prédéterminé, **caractérisé en ce que** le dispositif de sécurité (10) comprend un conduit auxiliaire d'évacuation (14 ; 14.1, 14.2) destiné à être relié à la source de fluide de commande (80), et
au moins une vanne d'évacuation (16 ; 16.1, 16.2) agencée sur ladite au moins une conduite d'évacuation (12), ladite au moins une vanne d'évacuation (16 ; 16.1, 16.2) comprenant un membre d'obturation relié au conduit auxiliaire d'évacuation (14; 14.1, 14.2), le membre d'obturation étant configuré pour placer sélectivement ladite au moins une vanne d'évacuation (16 ; 16.1, 16.2) i) dans une position de fermeture et ii) dans au moins une position d'ouverture, ladite au moins une vanne d'évacuation (16 ; 16.1, 16.2) étant configurée pour passer en position d'ouverture lorsque la pression du fluide de commande dans le conduit auxiliaire d'évacuation (14; 14.1, 14.2) est inférieure à un seuil d'évacuation prédéterminé,
ledit au moins un conduit auxiliaire d'évacuation (14 ; 14.1, 14.2) étant équipé d'une électrovanne auxiliaire d'évacuation (28 ; 28.1, 28.2) présentant i) une position de passage, dans laquelle le fluide de commande circule dans ledit au moins un conduit auxiliaire d'évacuation (14 ; 14.1, 14.2), et ii) une position d'échappement, dans laquelle le fluide de commande s'échappe dudit au moins un conduit auxiliaire d'évacuation (14 ; 14.1, 14.2),
ladite au moins une électrovanne auxiliaire d'évacuation (28 ; 28.1, 28.2) étant configurée pour passer de la position de passage à la position d'échappement lorsque l'alimentation électrique de ladite au moins une électrovanne auxiliaire d'évacuation (28 ; 28.1, 28.2) est interrompue.

2. Système de commande (1) selon la revendication 1, dans lequel ledit au moins un conduit auxiliaire de commande (6 ; 6.1, 6.2)est équipé d'une électrovanne auxiliaire de commande (26 ; 26.1, 26.2) présentant i) une position de passage, dans laquelle le fluide de commande circule dans ledit au moins un conduit auxiliaire de commande (6; 6.1, 6.2), et ii) une position d'échappement, dans laquelle le fluide de commande s'échappe dudit au moins un conduit auxiliaire de commande (6 ; 6.1, 6.2),
l'électrovanne auxiliaire de commande (26; 26.1, 26.2) étant configurée pour passer de la position de passage à la position d'échappement lorsque l'alimentation électrique de l'électrovanne auxiliaire de commande respective (26 ; 26.1, 26.2) est interrompue.

3. Système de commande (1) selon la revendication 2, dans lequel le dispositif de sécurité (10) comprend :
- un premier et un deuxième tronçons de commande (7.1, 7.2) agencés en parallèle et reliés chacun auxdites conduites de commande (4),
- une première et une deuxième vannes de commande (8.1, 8.2) agencées en parallèle sur les tronçons de commande (7.1, 7.2),
- un premier et un deuxième conduits auxiliaires de commande (6.1, 6.2) agencés en parallèle, et
- une première et une deuxième électrovannes auxiliaires de commande (26.1, 26.2) qui sont destinées à être reliées à la source de fluide de commande (80) et qui sont agencées respectivement sur le premier conduit auxiliaire de commande (6.1) et sur le deuxième conduit auxiliaire de commande (6.2) de façon à piloter respectivement la première vanne de commande (8.1) et la deuxième vanne de commande (8.2).

4. Système de commande (1) selon la revendication 3, le système de commande (1) comprenant en outre un premier et un deuxième capteurs auxiliaires de commande (27.1, 27.2) configurés pour générer un signal de défaillance respectivement lorsqu'au moins l'une parmi la première et de la deuxième vannes de commande (8.1, 8.2) n'atteignent pas leurs positions d'ouverture respectives.

5. Système de commande (1) selon la revendication 1, comprenant :
- une première et une deuxième vannes d'évacuation (16.1, 16.2) agencées en série sur une même conduite d'évacuation (12),
- un premier et un deuxième conduits auxiliaires d'évacuation (14.1, 14.2) agencés en parallèle,
- une première et une deuxième électrovannes auxiliaires d'évacuation (28.1, 28.2) agencées respectivement sur le premier conduit auxiliaire d'évacuation (14.1) et sur le deuxième conduit auxiliaire d'évacuation (14.2) de façon à piloter respectivement la première vanne d'évacuation (16.1) et la deuxième vanne d'évacuation (16.2).

6. Système de commande (1) selon la revendication 5, Z comprenant en outre un premier et un deuxième capteurs auxiliaires d'évacuation (29.1, 29.2) agencés respectivement sur la première et sur la deuxième vannes d'évacuation (28.1, 28.2), les premier et deuxième capteurs auxiliaires d'évacuation (29.1, 29.2) étant configurés de façon à générer un signal de défaillance respectivement lorsqu'au moins l'une parmi la première et de la deuxième vannes d'évacuation (28.1, 28.2) n'atteignent pas leurs positions de fermeture respectives.

7. Système de commande (1) selon l'une quelconque des revendications précédentes, dans lequel au moins une desdites vannes de débit (2.1-2.4) est configurée pour présenter i) une position de fermeture et ii) une unique position d'ouverture, ladite au moins une vanne de débit (2.1-2.4) étant configurée pour passer en position d'ouverture lorsque la pression du fluide de commande dans la conduite de commande respective (4) est inférieure à un seuil prédéterminé.

8. Système de commande (1) selon l'une quelconque des revendications 1 à 7, comprenant en outre plusieurs organes de régulation (21.1, 21.2, 21.3), chaque organe de régulation (21.1-21.3) étant configuré pour réguler la pression du fluide de commande dans une conduite de commande respective (4), de façon à placer sélectivement la vanne de débit respective (2.1-2.3) dans plusieurs positions d'ouverture.

9. Installation d'alimentation en fluide réactionnel (51), pour alimenter en au moins un fluide réactionnel au moins un organe de consommation, un fluide réactionnel pouvant par exemple être un hydrocarbure, l'installation d'alimentation en fluide réactionnel (51) comprenant au moins :
- un conteneur (52) configuré pour contenir du fluide réactionnel,
- plusieurs canalisations (54.1-54.4) reliées audit au moins un conteneur (52) et configurées pour la circulation dudit au moins un fluide réactionnel,
- un système de commande (1) selon l'une quelconque des revendications précédentes, chaque vanne de débit (2.1-2.4) étant agencée pour empêcher ou autoriser sélectivement la circulation dudit au moins un fluide réactionnel dans une canalisation respective (54.1-54.4), et
- une source de fluide de commande (80) configurée pour fournir un fluide de commande au système de commande (1).

10. Installation d'alimentation en fluide réactionnel (51) selon la revendication 9, comprenant une première et une deuxième canalisations (54.1, 54.2) qui sont reliées en un point de jonction (55), le système de commande (1) comprenant une première et une deuxième vannes de débit (2.1, 2.2) agencées sur la première canalisation (54.1) respectivement de part et d'autre du point de jonction (55),
chacune des vannes de débit (2.1, 2.2) étant configurée pour présenter i) une position de fermeture et ii) au moins une position d'ouverture, les vannes de débit (2.1, 2.2) étant configurées pour passer en position de fermeture lorsque la pression du fluide de commande dans la conduite de commande respective (4) est inférieure à une pression prédéterminée,
le système de commande (1) comprenant en outre une vanne d'échappement (56) agencée sur la deuxième canalisation (54.2) de façon à débiter dudit au moins un fluide réactionnel dans la deuxième canalisation (54.2), la deuxième canalisation (54.2) étant destinée à être reliée à une voie de rejet (58),
la vanne d'échappement (56) étant reliée à une conduite de commande (4), la vanne d'échappement (56) étant configurée pour présenter i) une position de fermeture et ii) au moins une position d'ouverture, la vanne d'échappement (56) étant configurée pour passer en position d'ouverture lorsque la pression du fluide de commande dans la conduite de commande (4) est inférieure à une pression prédéterminée.

11. Procédé d'alimentation (1000), pour alimenter au moins un organe de consommation en au moins un fluide réactionnel, ledit au moins un fluide réactionnel pouvant par exemple être un hydrocarbure, le procédé d'alimentation comprenant les étapes :
- (1002) fournir une installation d'alimentation en fluide réactionnel (51) selon l'une quelconque des revendications 9 à 10,
- (1004) relier chacune desdites conduites de commande (4) à la source de fluide de commande (80),
- (1006) placer le dispositif de sécurité (10) en configuration de service,
- (1008) soumettre chacune desdites conduites de commande (4) à une pression du fluide de commande supérieure à un seuil prédéterminé, de façon à placer chaque vanne de débit (2.1-2.4) dans des positions d'ouverture respectives, et ainsi à débiter dudit au moins un fluide réactionnel dans les canalisations (54.1-54.4).

12. Procédé de séparation d'air par distillation cryogénique comprenant un système de commande selon une des revendications 1 à 8.

## Patentansprüche

1. Steuersystem (1) zur Steuerung der Zirkulation von mindestens einem Reaktionsfluid in einem Zufuhrsystem für Reaktionsfluid, wobei das Steuersystem (1) Folgendes umfasst:
- mehrere Durchsatzventile (2.1, 2.2, 2.3, 2.4), die dazu konfiguriert sind, an jeweiligen Rohrleitungen (54.1, 54.2, 54.3, 54.4) angeordnet zu werden, die dazu vorgesehen sind, mindestens ein Reaktionsfluid abzugeben, wobei jedes der Durchsatzventile (2.1-2.4) dazu konfiguriert ist, um mindestens Folgendes aufzuweisen: i) eine Schließstellung und ii) eine Öffnungsstellung, in der das mindestens eine Reaktionsfluid in der jeweiligen Rohrleitung (54.1 -54.4) fließen kann,
- mehrere Steuerleitungen (4), die zur Verbindung mit einer Steuerfluidquelle (80) vorgesehen sind, wobei das Steuerfluid zum Beispiel Druckluft sein kann, wobei jedes der Durchsatzventile (2.1-2.4) mit einer entsprechenden Steuerleitung (4) verbunden ist, wobei mehrere der Durchsatzventile (2.1-2.4) dazu konfiguriert sind, in eine Schließstellung zu wechseln, wenn der Druck des Steuerfluids in der jeweiligen Steuerleitung (4) unter einem vorbestimmten Schwellenwert liegt, wobei das Steuersystem (1) weiter Folgendes umfasst:
- mindestens eine Auslassleitung (12), die mit jeder der Steuerleitungen (4) verbunden ist, so dass ein Auslassen des Steuerfluids aus jeder Steuerleitung (4) ermöglicht wird,
- eine Sicherheitsvorrichtung (10), die i) mit jeder Steuerleitung (4) und ii) mit der mindestens einen Auslassleitung (12) verbunden ist, wobei die Sicherheitsvorrichtung (10) dazu konfiguriert ist, um selektiv Folgendes aufzuweisen:
i) mindestens eine Betriebskonfiguration, in der das Steuerfluid zu jeder Steuerleitung (4) fließen kann, so dass jedes der Durchsatzventile (2.1-2.4) in eine jeweilige Öffnungsstellung gebracht werden kann, und
ii) eine Sicherheitskonfiguration, in der das Steuerfluid von jedem der Durchsatzventile (2.1-2.4) durch die mindestens eine Auslassleitung (12) fließen kann, so dass die Durchsatzventile (2.1-2.4) in die Schließstellung versetzt werden, wenn der Druck des Steuerfluids in den Steuerleitungen (2.1-2.4) unter dem vorbestimmten Schwellwert liegt,
wobei die Sicherheitsvorrichtung (10) weiter mindestens Folgendes umfasst:
- eine Hilfssteuerleitung (6; 6.1, 6.2), die zur Verbindung mit der Steuerfluidquelle (80) vorgesehen ist,
- mindestens ein Steuerventil (8; 8.1, 8.2), das mit jeder Steuerleitung (4) verbunden ist, wobei das mindestens eine Steuerventil (8; 8.1, 8.2) ein Verschlussorgan umfasst, das mit der Hilfssteuerleitung (6; 6.1, 6.2) verbunden ist, wobei das Verschlussorgan dazu konfiguriert ist, das mindestens eine Steuerventil (8; 8.1, 8.2) selektiv i) in eine Schließstellung und ii) in mindestens eine Öffnungsstellung zu bringen, wobei das mindestens eine Steuerventil (8; 8.1, 8.2) dazu konfiguriert ist, in die Schließstellung zu wechseln, wenn der Druck des Steuerfluids in der Hilfssteuerleitung (6; 6.1, 6.2) unter einem vorbestimmten Sicherheitsschwellenwert liegt, **dadurch gekennzeichnet, dass** die Sicherheitsvorrichtung (10) eine Hilfsauslassleitung (14; 14.1, 14.2) umfasst, die zur Verbindung mit der Steuerfluidquelle (80) vorgesehen ist, und
mindestens ein Auslassventil (16; 16.1, 16.2), das auf der mindestens einen Auslassleitung (12) angeordnet ist, wobei das mindestens eine Auslassventil (16; 16.1, 16.2) ein Verschlussorgan umfasst, das mit der Hilfsauslassleitung (14; 14.1, 14.2) verbunden ist, wobei das Verschlussorgan dazu konfiguriert ist, das mindestens eine Auslassventil (16; 16.1, 16.2) selektiv i) in eine Schließstellung und ii) in mindestens eine Öffnungsstellung zu bringen, wobei das mindestens eine Auslassventil (16; 16.1, 16.2) dazu konfiguriert ist, in eine Öffnungsstellung zu wechseln, wenn der Druck des Steuerfluids in der Hilfsauslassleitung (14; 14.1, 14.2) unter einem vorbestimmten Auslassschwellenwert liegt,
wobei die mindestens eine Hilfsauslassleitung (14; 14.1, 14.2) mit einem Hilfsauslassmagnetventil (28; 28.1, 28.2) ausgestattet ist, das i) eine Durchlassstellung, in der das Steuerfluid durch die mindestens eine Hilfsauslassleitung (14; 14.1, 14.2) fließt, und ii) eine Austrittsstellung aufweist, in der das Steuerfluid aus der mindestens einen Hilfsauslassleitung (14; 14.1, 14.2) austritt,
wobei das mindestens eine Hilfsauslassmagnetventil (28; 28.1, 28.2) dazu konfiguriert ist, von der Durchlassstellung in die Austrittsstellung zu wechseln, wenn die Stromversorgung des mindestens einen Hilfsauslassmagnetventils (28; 28.1, 28.2) unterbrochen ist.

2. Steuersystem (1) nach Anspruch 1, wobei die mindestens eine Hilfssteuerleitung (6; 6.1, 6.2) mit einem Hilfssteuermagnetventil (26; 26.1, 26.2) ausgestattet ist, das i) eine Durchlassstellung, in der das Steuerfluid durch die mindestens eine Hilfssteuerleitung (6; 6.1, 6.2) fließt, ii) eine Austrittsstellung, in der das Steuerfluid aus mindestens einen Hilfssteuerleitung (6; 6.1, 6.2) austritt,
wobei das Hilfssteuermagnetventil (26; 26.1, 26.2) dazu konfiguriert ist, von der Durchlassstellung in die Austrittsstellung zu wechseln, wenn die Stromversorgung des jeweiligen Hilfssteuermagnetventils (26; 26.1, 26.2) unterbrochen wird.

3. Steuersystem (1) nach Anspruch 2, wobei die Sicherheitsvorrichtung (10) Folgendes umfasst:
- einen ersten und einen zweiten Steuerabschnitt (7.1, 7.2), die parallel angeordnet und jeweils mit den Steuerleitungen (4) verbunden sind,
- ein erstes und ein zweites Steuerventil (8.1, 8.2), die parallel auf den Steuerabschnitten (7.1, 7.2) angeordnet sind,
- eine erste und eine zweite Hilfssteuerleitung (6.1, 6.2), die parallel angeordnet sind, und
- ein erstes und ein zweites Hilfssteuermagnetventil (26.1, 26.2), die zur Verbindung mit der Steuerfluidquelle (80) vorgesehen sind und die auf der ersten Hilfssteuerleitung (6.1) bzw. auf der zweiten Hilfssteuerleitung (6.2) so angeordnet sind, dass sie das erste Steuerventil (8.1) bzw. das zweite Steuerventil (8.2) steuern.

4. Steuersystem (1) nach Anspruch 3, wobei das Steuersystem (1) weiter einen ersten und einen zweiten Hilfssteuersensor (27.1, 27.2) umfasst, die dazu konfiguriert sind, jeweils ein Fehlersignal zu erzeugen, wenn mindestens das eine des ersten und des zweiten Steuerventils (8.1, 8.2) seine jeweiligen Öffnungsstellungen nicht erreicht.

5. Steuersystem (1) nach Anspruch 1, umfassend:
- ein erstes und ein zweites Auslassventil (16.1, 16.2), die in Reihe auf einer selben Auslassleitung (12) angeordnet sind,
- eine erste und eine zweite Hilfsauslassleitung (14.1, 14.2), die parallel angeordnet sind,
- ein erstes und ein zweites Hilfsauslassmagnetventil (28.1, 28.2), die auf der ersten Hilfsauslassleitung (14.1) bzw. auf der zweiten Hilfsauslassleitung (14.2) so angeordnet sind, dass sie jeweils das erste Auslassventil (16.1) und das zweite Auslassventil (16.2) steuern.

6. Steuersystem (1) nach Anspruch 5, weiter einen ersten und einen zweiten Hilfsauslasssensor (29.1, 29.2) umfassend, die auf dem ersten bzw. auf dem zweiten Auslassventil (28.1, 28.2) angeordnet sind, wobei der erste und der zweite Hilfsauslasssensor (29.1, 29.2) so konfiguriert sind, dass sie jeweils ein Fehlersignal erzeugen, wenn mindestens das eine des ersten und des zweiten Auslassventils (28.1, 28.2) seine jeweiligen Schließstellungen nicht erreicht.

7. Steuersystem (1) nach einem der vorstehenden Ansprüche, wobei mindestens eines der Durchsatzventile (2.1-2.4) dazu konfiguriert ist, i) eine Schließstellung und ii) eine einzelne Öffnungsstellung aufzuweisen, wobei das mindestens eine Durchsatzventil (2.1-2.4) dazu konfiguriert ist, in die Öffnungsstellung zu wechseln, wenn der Druck des Steuerfluids in der jeweiligen Steuerleitung (4) unter einem vorbestimmten Schwellenwert liegt.

8. Steuersystem (1) nach einem der Ansprüche 1 bis 7, weiter mehrere Regelorgane (21.1, 21.2, 21.3) umfassend, wobei jedes Regelorgan (21.1-21.3) dazu konfiguriert ist, den Druck des Steuerfluids in einer jeweiligen Steuerleitung (4) so zu regeln, dass das jeweilige Durchsatzventil (2.1-2.3) selektiv in mehrere Öffnungsstellungen gebracht wird.

9. Zufuhrsystem (51) für Reaktionsfluid zur Zufuhr mindestens eines Reaktionsfluids zu mindestens einem Verbrauchsorgan, wobei ein Reaktionsfluid zum Beispiel ein Kohlenwasserstoff sein kann, wobei das Zufuhrsystem (51) für Reaktionsfluid mindestens Folgendes umfasst:
- einen Behälter (52), der zur Aufnahme des Reaktionsfluids konfiguriert ist,
- mehrere Rohrleitungen (54.1-54.4), die mit dem mindestens einen Behälter (52) verbunden und für die Zirkulation des mindestens einen Reaktionsfluids konfiguriert sind,
- ein Steuersystem (1) nach einem der vorstehenden Ansprüche, wobei jedes Durchsatzventil (2.1-2.4) angeordnet ist, um die Zirkulation des mindestens einen Reaktionsfluids in einer jeweiligen Rohrleitung (54.1-54.4) selektiv zu verhindern oder zu erlauben, und
- eine Steuerfluidquelle (80), die dazu konfiguriert ist, dem Steuersystem (1) ein Steuerfluid zuzuführen.

10. Zufuhrsystem (51) für Reaktionsfluid nach Anspruch 9, eine erste und eine zweite Rohrleitung (54.1, 54.2) umfassend, die an einem Verbindungspunkt (55) verbunden sind, wobei das Steuersystem (1) ein erstes und ein zweites Durchsatzventil (2.1, 2.2) umfasst, die auf der ersten Rohrleitung (54.1) jeweils auf beiden Seiten des Verbindungspunktes (55) angeordnet sind,
wobei jedes der Durchsatzventile (2.1, 2.2) dazu konfiguriert ist, i) eine Schließstellung und ii) mindestens eine Öffnungsstellung aufzuweisen, wobei die Durchsatzventile (2.1, 2.2) dazu konfiguriert sind, in die Schließstellung zu wechseln, wenn der Druck des Steuerfluids in der jeweiligen Steuerleitung (4) unter einem vorbestimmten Druck liegt,
wobei das Steuersystem (1) weiter ein Auslassventil (56) umfasst, das auf der zweiten Rohrleitung (54.2) so angeordnet ist, dass es das mindestens eine Reaktionsfluid in die zweite Rohrleitung (54.2) abgibt, wobei die zweite Rohrleitung (54.2) zur Verbindung mit einem Ableitungskanal (58) vorgesehen ist,
wobei das Auslassventil (56) mit einer Steuerleitung (4) verbunden ist,
wobei das Auslassventil (56) konfiguriert ist, um i) eine Schließstellung und ii) mindestens eine Öffnungsstellung aufzuweisen, wobei das Auslassventil (56) dazu konfiguriert ist, in die Öffnungsstellung zu wechseln, wenn der Druck des Steuerfluids in der Steuerleitung (4) unter einem vorbestimmten Druck liegt.

11. Zufuhrverfahren (1000) zum Zuführen mindestens eines Reaktionsfluids zu mindestens einem Verbrauchsorgan, wobei das mindestens eine Reaktionsfluid zum Beispiel ein Kohlenwasserstoff sein kann, wobei das Zufuhrverfahren die folgenden Schritte umfasst:
- (1002) Bereitstellung eines Zufuhrsystems (51) für Reaktionsfluid nach einem der Ansprüche 9 bis 10,
- (1004) Verbindung jeder der Steuerleitungen (4) mit der Steuerfluidquelle (80),
- (1006) Einstellung der Sicherheitsvorrichtung (10) auf die Betriebskonfiguration,
- (1008) Beaufschlagen jeder der Steuerleitungen (4) mit einem Druck des Steuerfluids über einem vorbestimmten Schwellenwert, um jedes Durchsatzventil (2.1-2.4) in jeweilige Öffnungsstellungen zu bringen und somit das mindestens eine Reaktionsfluid in die Rohrleitungen (54.1-54.4) abzugeben.

12. Verfahren zur Trennung von Luft durch kryogene Destillation, das ein Steuersystem nach einem der Ansprüche 1 bis 8 umfasst.

## Claims

1. Control system (1), for controlling the circulation of at least one reaction fluid in a system supplying reaction fluid, the control system (1) comprising:
- a plurality of flow valves (2.1, 2.2, 2.3, 2.4) configured to be arranged on respective channels (54.1, 54.2, 54.3, 54.4) intended to deliver at least one reaction fluid, with each one of said flow valves (2.1-2.4) being configured to have at least: i) a closed position and ii) an open position wherein said at least one reaction fluid can flow in the respective channel (54.1.-54.4),
- a plurality of control pipes (4) intended to be connected to a source of control fluid (80), the control fluid able for example to be compressed air, with each one of said flow valves (2.1-2.4) being connected to a respective control pipe (4), a plurality of said flow valves (2.1-2.4) being configured to switch to the closed position when the pressure of the control fluid in the respective control pipe (4) is less than a predetermined threshold,
the control system (1) further comprising:
- at least one discharge pipe (12) connected to each one of said control pipes (4), in such a way as to allow for a discharge of the control fluid from each control pipe (4),
- a safety device (10) connected i) to each control pipe (4) and ii) to said at least one discharge pipe (12), the safety device (10) being configured to have, selectively:
i) at least one service configuration, wherein the control fluid can flow to each control pipe (4) in such a way that each one of said flow valves (2.1-2.4) can be placed in a respective open position, and
ii) a safety configuration, wherein the control fluid can flow from each one of said flow valves (2.1-2.4) through said at least one discharge pipe (12) in such a way that said flow valves (2.1-2.4) are placed in the closed position when the pressure of the control fluid in said control pipes (2.1-2.4) is less than the predetermined threshold,
the safety device (10) further comprising at least:
- one auxiliary control pipe (6; 6.1, 6.2) intended to be connected to the source of control fluid (80),
- at least one control valve (8; 8.1, 8.2) connected to each control pipe (4), said at least one control valve (8; 8.1, 8.2); comprising a shutter member connected to the auxiliary control pipe (6; 6.1, 6.2), the shutter member being configured to selectively place said at least one control valve (8; 8.1, 8.2) i) in a closed position and ii) in at least one open position, said at least one control valve (8; 8.1, 8.2) being configured to switch to the closed position when the pressure of the control fluid in the auxiliary control pipe (6; 6.1, 6.2) is less than a predetermined safety threshold,
**characterised in that** the safety device (10) comprises an auxiliary discharge pipe (14; 14.1, 14.2) intended to be connected to the source of control fluid (80), and
at least one discharge valve (16; 16.1, 16.2) arranged on said at least one discharge pipe (12), said at least one discharge valve (16; 16.1, 16.2) comprising a shutter member connected to the auxiliary discharge pipe (14; 14.1, 14.2), the shutter member being configured to selectively place said at least one discharge valve (16; 16.1, 16.2) i) in a closed position and ii) in at least one open position, said at least one discharge valve (16; 16.1, 16.2) being configured to switch to the open position when the pressure of the control fluid in the auxiliary discharge pipe (14; 14.1, 14.2) is less than a predetermined discharge threshold,
said at least one auxiliary discharge pipe (14; 14.1, 14.2) being provided with an auxiliary discharge solenoid valve (28; 28.1, 28.2) having i) a passing position, wherein the control fluid flows in said at least one auxiliary discharge pipe (14; 14.1, 14.2), and ii) an escaping position, wherein the control fluid escapes from said at least one auxiliary discharge pipe (14; 14.1, 14.2),
said at least one auxiliary discharge solenoid valve (28; 28.1, 28.2) being configured to switch from the passing position to the escaping position when the electrical power supply of said at least one auxiliary discharge solenoid valve (28; 28.1, 28.2) is interrupted.

2. Control system (1) according to claim 1, wherein said at least one auxiliary control pipe (6; 6.1, 6.2) is provided with an auxiliary control solenoid valve (26; 26.1, 26.2) having i) a passing position, wherein the control fluid flows in said at least one auxiliary control pipe (6; 6.1, 6.2), and ii) an escaping position, wherein the control fluid escapes from said at least one auxiliary control pipe (6; 6.1, 6.2),
the auxiliary control solenoid valve (26; 26.1, 26.2) being configured to switch from the passing position to the escaping position when the electrical power supply of the respective auxiliary control solenoid valve (26; 26.1, 26.2) is interrupted.

3. Control system (1) according to claim 2, wherein the safety device (10) comprises:
- a first and a second control segment (7.1, 7.2) arranged in parallel and each connected to said control pipes (4),
- a first and a second control valve (8.1, 8.2) arranged in parallel on the control segments (7.1, 7.2),
- a first and a second auxiliary control pipe (6.1, 6.2) arranged in parallel, and
- a first and a second auxiliary control solenoid valve (26.1, 26.2) which are intended to be connected to the source of control fluid (80) and which are arranged respectively on the first auxiliary control pipe (6.1) and on the second auxiliary control pipe (6.2) in such a way as to respectively control the first control valve (8.1) and the second control valve (8.2).

4. Control system (1) according to claim 3, the control system (1) further comprising a first and a second auxiliary control sensor (27.1, 27.2) configured to generate a failure signal respectively when at least one among the first and the second control valves (8.1, 8.2) does not reach the respective open positions thereof.

5. Control system (1) according to claim 1, comprising:
- a first and a second discharge valve (16.1, 16.2) arranged in series on the same discharge pipe (12),
- a first and a second auxiliary discharge pipe (14.1, 14.2) arranged in parallel,
- a first and a second auxiliary discharge solenoid valve (28.1, 28.2) arranged respectively on the first auxiliary discharge pipe (14.1) and on the second auxiliary discharge pipe (14.2) in such a way as to respectively control the first discharge valve (16.1) and the second discharge valve (16.2).

6. Control system (1) according to claim 5, further comprising a first and a second auxiliary discharge sensor (29.1, 29.2) arranged respectively on the first and on the second discharge valves (28.1, 28.2), the first and second auxiliary discharge sensors (29.1, 29.2) being configured so as to generate a failure signal respectively when at least one among the first and the second discharge valves (28.1, 28.2) does not reach the respective closed positions thereof.

7. Control system (1) according to any one of the preceding claims, wherein at least one of said flow valves (2.1-2.4) is configured to have i) a closed position and ii) a single open position, said at least one flow valve (2.1-2.4) being configured to switch to the open position when the pressure of the control fluid in the respective control pipe (4) is less than a predetermined threshold.

8. Control system (1) according to any one of claims 1 to 7, further comprising a plurality of regulating members (21.1, 21.2, 21.3), each regulating member (21.1-21.3) being configured to adjust the pressure of the control fluid in a respective control pipe (4), in such a way as to selectively place the respective flow valve (2.1-2.3) in a plurality of open positions.

9. System supplying reaction fluid (51), for supplying at least one reaction fluid to least one consumption member, a reaction fluid that for example can be a hydrocarbon, the system supplying reaction fluid (51) comprising at least:
- one container (52) configured to contain reaction fluid,
- a plurality of channels (54.1-54.4) connected to said at least one container (52) and configured for the circulation of said at least one reaction fluid,
- a control system (1) according to any one of the preceding claims, each flow valve (2.1-2.4) being arranged to selectively prevent or allow the circulation of said at least one reaction fluid in a respective channel (54.1-54.4), and
- a source of control fluid (80) configured to supply a control fluid to the control system (1).

10. System supplying reaction fluid (51) according to claim 9, comprising first and second channels (54.1, 54.2) which are connected at a junction point (55), the control system (1) comprising a first and a second flow valve (2.1, 2.2) arranged on the first channel (54.1) respectively on either side of the junction point (55),
each one of the flow valves (2.1, 2.2) being configured to have i) a closed position and ii) at least one open position, the flow valves (2.1, 2.2) being configured to switch to the closed position when the pressure of the control fluid in the respective control pipe (4) is less than a predetermined pressure,
the control system (1) further comprising an escape valve (56) arranged on the second channel (54.2) in such a way as to deliver said at least one reaction fluid in the second channel (54.2), the second channel (54.2) being intended to be connected to a release route (58),
the escape valve (56) being connected to a control pipe (4), the escape valve (56) being configured to have i) a closed position and ii) at least one open position, the escape valve (56) being configured to switch to the open position when the pressure of the control fluid in the control pipe (4) is less than a predetermined pressure.

11. Supply method (1000), for supplying at least one consumption member with at least one reaction fluid, said at least one reaction fluid able for example to be a hydrocarbon, the supply method comprising the steps of:
- (1002) providing a system for supplying reaction fluid (51) according to either one of claims 9 to 10,
- (1004) connecting each one of said control pipes (4) to the source of control fluid (80),
- (1006) placing the safety device (10) in the service configuration,
- (1008) subjecting each one of said control pipes (4) to a pressure of the control fluid greater than a predetermined threshold, in such a way as to place each flow valve (2.1-2.4) in respective open positions, and thus to deliver said at least one reaction fluid in the channels (54.1-54.4).

12. Method for separating air by cryogenic distillation comprising a control system according to one of claims 1 to 8.
